# EUROPEAN PATENT SPECIFICATION

(11) **EP 2 505 816 B1**
(45) Date of publication and mention of the grant of the patent: **28.09.2016**
(21) Application number: 09851645.3
(22) Date of filing: 25.11.2009
(51) Int. Cl.: F02F 3/22, F01P 3/10, F02F 3/00, F02F 3/26, F02B 23/06

(54) **PISTON FOR INTERNAL COMBUSTION ENGINE AND INTERNAL COMBUSTION ENGINE**
KOLBEN FÜR VERBRENNUNGSMOTOR UND VERBRENNUNGSMOTOR MIT DEM KOLBEN
PISTON POUR MOTEUR À COMBUSTION INTERNE ET MOTEUR À COMBUSTION INTERNE

(43) Date of publication of application: 03.10.2012
(73) Proprietor: TOYOTA JIDOSHA KABUSHIKI KAISHA, Toyota-shi, Aichi-ken, 471-8571 (JP)
(72) Inventor: OHKAWA, Satoshi, Toyota-shi Aichi 471-8571 (JP)
(74) Representative: TBK
(86) International application number: PCT/JP2009/069877
(87) International publication number: WO 2011/064853

(56) References cited:
- JP-A- H0 921 319
- JP-A- H1 061 436
- JP-A- 10 061 436
- JP-A- 11 193 721
- JP-A- 2006 527 326
- US-A- 3 221 718
- US-A- 3 221 722
- US-A- 3 323 503
- US-A- 3 616 729

## Description

### TECHNICAL FIELD

The present invention relates to an internal combustion engine piston and an internal combustion engine.

### BACKGROUND ART

There has been known a technique in which a piston is formed in its crown or top with a cavity for combustion of fuel, and is also formed in the surroundings of this cavity with an annular passage as a cooling channel through which lubricating oil flows (for example, see a first patent document). In this technique, after an upper portion and a lower portion of the piston have been formed separately from each other, annular grooves are formed in these upper portion and lower portion, respectively, so that when these upper portion and lower portion are joined to each other, the annular passage is formed by the annular grooves.

Here, the combustion state of fuel can be made stable by raising the temperature of the surface of the cavity in a quick manner after the start up of an engine. For this reason, it is considered to use a material of relatively high heat insulation for the surroundings of the cavity. However, when such a material is used, the temperature of the piston, after having become high to a sufficient extent, does not immediately drop even if lubricating oil is supplied to the cooling channel, so there is a fear that the piston may be overheated. In addition, the cooling capacity may be insufficient because it is difficult for the heat from the cavity to conduct to the lubricating oil. That is, it becomes difficult to adjust the temperature of the cavity. Moreover, although the temperature of the lubricating oil can be raised by the heat from the cavity so as to reduce friction loss, the rise in the temperature of the lubricating oil will become slow due to the difficulty for the heat from the cavity to conduct to the lubricating oil.

### PRIOR ART REFERENCES

### PATENT DOCUMENTS

First Patent Document: Japanese patent application laid-open JP 2007-270812 A
Second Patent Document: Japanese patent application laid-open JP H09-021319 A
Third Patent Document: Japanese patent application laid-open JP H07-077105 A
Fourth Patent Document: Japanese patent application laid-open JP 2004-285944 A
Fifth Patent Document: Japanese patent JP 3290671 A
Sixth Patent Document: US 3 323 503 A
Seventh Patent Document: JP H10 61436 A

US 3 323 503 A discloses a piston with a structure as in the preamble of claim 1. The piston has a crown and a cavity. The crown extends to a bottom surface of a cooling channel. The crown is fixed by a screw. The bottom surface of the cooling channel around the periphery of screw is flat.

JP H10 61436 A discloses another piston. The piston comprises a crown that has an open cavity formed to be recessed from a piston top surface toward a piston lower side; an outer peripheral portion that is joined to the crown so as to surround at least a piston outer peripheral side of the crown, and has three ring grooves formed on its outer periphery.

### SUMMARY OF THE INVENTION

### PROBLEMS TO BE SOLVED BY THE INVENTION

The present invention has been made in view of the problems as mentioned above, and the object of the present invention is to provide an improved piston considering both an early or quick rise in the temperature of the piston and suppression of overheating thereof. Further, an improved internal combustion engine shall be provided.

### MEANS FOR SOLVING THE PROBLEMS

With respect to the piston, the above object is solved by a piston having the features of claim 1. Further developments of the piston are stated in the dependent claims. An internal combustion engine is stated in claim 4.

In the present invention, on the bottom surface of the cooling channels, the periphery of the central reinforcement portion is in a state such that it is recessed to the piston lower side along the central reinforcement portion. Thus, even after the supply of the lubricating oil is stopped and the lubricating oil is discharged from the through holes, the lubricating oil is stored or retained in such a recessed portion. Accordingly, the temperature of the cavity can be caused to drop by means of this lubricating oil through the central reinforcement portion. As a result of this, it is possible to suppress a heat spot from being generated on a wall surface of a central portion of the cavity in which the temperature thereof tends to go up, thereby making it possible to further improve reliability and durability. In addition, in cases where the bottom surface of the cooling channels is constructed by the outer peripheral portion, at the time of joining the outer peripheral portion and the crown to each other, the alignment thereof becomes easy by means of the recessed portion.

Here, the piston top surface is a surface of the piston in opposition to a combustion chamber. Also, the piston lower side is a crankshaft side. The cavity is formed by making a part of the piston top surface into a concave or recessed shape. In the internal combustion engine having this piston, fuel is injected into the cavity. The cavity is formed only by the piston crown.

The outer peripheral portion surrounds at least the piston outer peripheral side of the crown, and hence, it can be said that the piston outer peripheral side at an outer side of the cavity is also surrounded by the outer peripheral portion. The outer peripheral portion and the crown are joined to each other with individual parts of them being in intimate contact with each other. Other than this joined surface, the gap is formed between the outer peripheral portion and the crown. Then, this gap serves as a cooling channel. The crown and the outer peripheral portion are joined to each other so that when the lubricating oil flows through the inside of the cooling channels, the lubricating oil does not flow into a combustion chamber side. In addition, the communication holes serve as the inlet port or the outlet port for the lubricating oil. The lubricating oil supplied to the cooling channels from one of the communication holes is discharged from the other communication hole, after flowing through the cooling channels.

The cooling channels are arranged at the piston outer peripheral side and at the piston lower side of the cavity, respectively. The cooling channel formed at the piston lower side of the cavity has a bottom surface which may be a part of the crown, or may be a part of the outer peripheral portion. In addition, because the cooling channels are formed in such a manner as to surround the cavity, the heat generated in the cavity is apt to conduct to the lubricating oil. Also, because the cooling channel formed at the piston outer peripheral side of the cavity and the cooling channel formed at the piston lower side are made in communication with each other, the lubricating oil is able to move from the piston outer peripheral side to the piston lower side, or from the piston lower side to the piston outer peripheral side. As a result of this, the temperature of the cavity can be made uniform.

Here, if the lubricating oil is not supplied to the cooling channels or if the amount of supply of the lubricating oil is reduced, the temperature of the crown will become easy to go up. As a result, it becomes possible to achieve an early rise in temperature of the cavity. On the other hand, if the lubricating oil is made to circulate in the cooling channels, the lubricating oil will flow in such a manner as to wrap around the cavity, so that the cavity can be cooled in a uniform manner. Moreover, the heat in the cavity is apt to conduct to the lubricating oil, and hence, the temperature of the lubricating oil can be raised in a quick manner, thus making it possible to reduce friction loss. Accordingly, it is possible to make both the early rise in temperature of the piston and the suppression of overheating thereof compatible with each other.

In the present invention, said outer peripheral portion may also surround a piston lower portion at the lower side of said crown, and said cooling channels may be gaps between said crown and said outer peripheral portion, and may be formed at the piston outer peripheral side and at the piston lower side of said crown.

That is, the outer peripheral portion surrounds the piston outer peripheral side and the piston lower side of the crown, and hence, it can be said that the outer peripheral portion surrounds the piston outer peripheral side and the piston lower side of the cavity. And, other than the joined surface between the outer peripheral portion and the crown, a gap is formed between the outer peripheral portion and the crown, and this gap serves as a cooling channel.

In the present invention, said crown may have a reinforcement part which protrudes to a side of said cooling channels so as to reinforce said crown, and which is arranged with a passage being formed for the lubricating oil to move between the individual cooling channels which are formed at the piston outer peripheral side and at the piston lower side of said cavity, respectively.

Specifically, the deformation or breakage of the crown due to a force generated by the combustion of fuel can be suppressed by means of the reinforcement part. In addition, due to the reinforcement of the crown, it becomes possible to reduce the thickness of the crown, and hence, the heat capacity of the crown can be made small. As a result, if the lubricating oil is not supplied to the cooling channels at the time of cold start of the engine, etc., or if the amount of supply of the lubricating oil is decreased, it will become possible to raise the temperature of the cavity in a quick manner. Further, if the lubricating oil is supplied to the cooling channels, the temperature of the lubricating oil will be able to be quickly raised, thus making it possible to reduce the friction loss.

In addition, the reinforcement part is arranged with the passage being formed for the lubricating oil to move, so that the individual cooling channels are made in communication with each other. Then, by adjusting the shape of the reinforcement part, it is possible to adjust the direction in which the lubricating oil flows. As a result of this, for example, the lubricating oil can be circulated intensively in those places where the temperature thereof is apt to go up, or the lubricating oil can be circulated in a uniform manner. Moreover, if the crown is reinforced by the reinforcement part, it will also be possible to increase the volume of the cooling channels.

In the present invention, said passage through which the lubricating oil moves may also be formed at the piston lower side of said reinforcement part.

Specifically, the lubricating oil can move between the individual cooling channels by passing at the piston lower side of the reinforcement part. In addition, at the time when the internal combustion engine is stopped, the lubricating oil flows at the lower side of the reinforcement part, whereby the lubricating oil can also be discharged from the cooling channels to the piston outside in a quick manner.

In the present invention, a material, which is smaller in specific heat than said outer peripheral portion, may be used for said crown.

According to this, the heat capacity of the crown can be made small. As a result, the temperature of the cavity can be raised in a quick manner at the time of cold start of the engine. In addition, when the lubricating oil is supplied to the cooling channels, the temperature of the cavity can be made to drop in a prompt manner, so that the overheating of the cavity can be suppressed. Further, the temperature of the lubricating oil circulating in the cooling channels can be quickly raised, thus making it possible to reduce the friction loss.

In the present invention, said crown may be constructed to include a skirt portion of the piston.

The skirt portion is a portion of the piston at the lower side of the ring groove for holding the piston ring. In addition, the crown extends up to the skirt portion. According to this, the heat in the cavity can be conducted to the skirt portion in a quick manner, so that the temperature of the skirt portion can be raised in a prompt manner. As a result of this, for example, the temperature of the oil can be raised, thus making it possible to reduce frictional resistance. Here, note that the skirt portion may be constructed by the outer peripheral portion and the crown, or it may be constructed by the crown alone.

In addition, in order to achieve the above-mentioned object, an internal combustion engine according to the present invention adopts the following means. That is, an internal combustion engine according to the present invention is characterized by comprising:
said piston for an internal combustion engine;
a lubricating oil supply device that supplies the lubricating oil to said cooling channels through said communication holes;
an adjustment device that adjusts an amount of the lubricating oil to be supplied to said cooling channels from said lubricating oil supply device; and
a control device that makes the amount of the lubricating oil to be supplied smaller when the temperature of the internal combustion engine is low than when it is high.

Specifically, when the temperature of the internal combustion engine is low, the heat taken from the crown and the outer peripheral portion can be decreased by making the amount of supply of the lubricating oil relatively small, so that the temperatures of the crown and the outer peripheral portion can be caused to rise in a quick manner. On the other hand, when the temperature of the internal combustion engine is high, the heat taken from the crown and the outer peripheral portion can be increased by making the amount of supply of the lubricating oil relatively large, so that the crown and the outer peripheral portion can be suppressed from being overheated.

The control device may selectively control whether the lubricating oil is supplied or the supply thereof is stopped. In addition, the amount of supply of the lubricating oil may be changed in a stepwise manner or in a continuous manner in accordance with the temperature thereof. Moreover, the higher the temperature, the larger the amount of supply of the lubricating oil can be made.

### EFFECT OF THE INVENTION

According to the present invention, it is possible to make both an early rise in the temperature of a piston and the suppression of overheating thereof compatible with each other.

### BRIEF DESCRIPTION OF THE DRAWINGS

[Fig. 1] is a longitudinal cross sectional view when a piston is cut in a longitudinal direction thereof along a central axis of the piston according to a first embodiment of the present invention.
[Fig. 2] is a transverse cross sectional view when the piston is cut along a cutting line Z shown in Fig. 1.
[Fig. 3] is a schematic construction view of an engine in which the piston according to this embodiment is incorporated.
[Fig. 4] is a view showing a longitudinal cross section of a central joined portion.
[Fig. 5] is a view showing a longitudinal cross section of the central joined portion.
[Fig. 6] is a time chart showing the change over time of the temperature of a cavity wall surface.
[Fig. 7] is another transverse cross sectional view when the piston according to the first embodiment is cut.
[Fig. 8] is a flow chart showing a control flow of a cutoff valve according to the embodiment.
[Fig. 9] is a longitudinal cross sectional view when a piston is cut in a longitudinal direction thereof along a central axis A of a piston not according to the present invention.
[Fig. 10] is a transverse cross sectional view when the piston is cut along a cutting line Z shown in Fig. 9.
[Fig. 11] is a longitudinal cross sectional view when a piston is cut in a longitudinal direction thereof along a central axis A of another piston not according to the present invention.
[Fig. 12] is a transverse cross sectional view when the piston is cut along a cutting line Z shown in Fig. 11.

### MODES FOR CARRYING OUT THE INVENTION

Hereinafter, reference will be made to a specific embodiment of an internal combustion engine piston and an internal combustion engine according to the present invention based on the attached drawings.

### First Embodiment

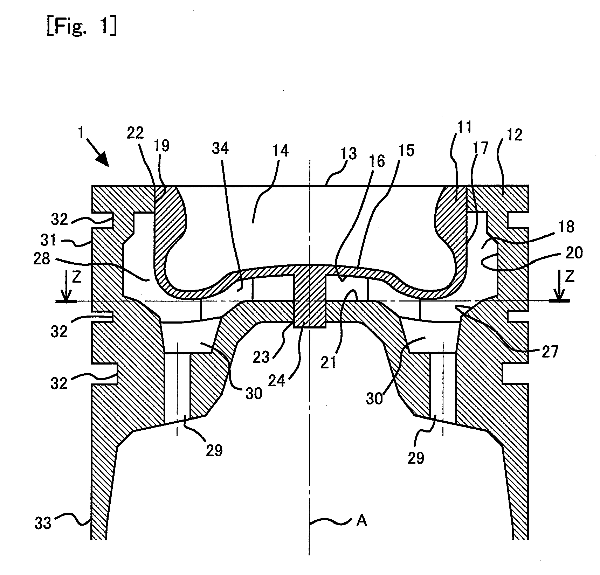

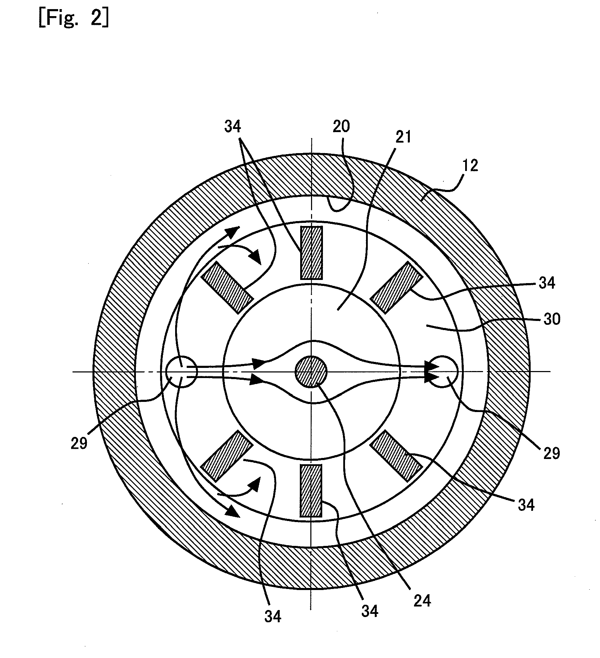

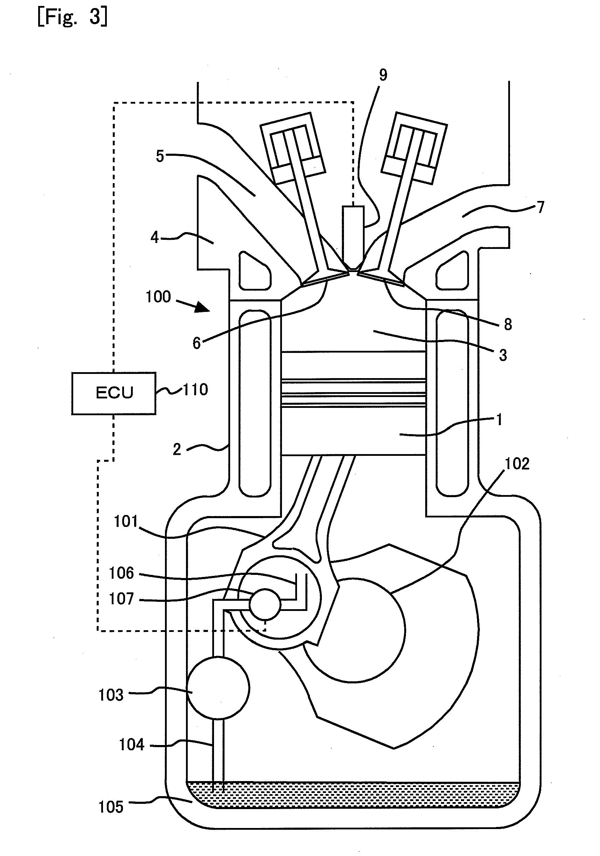

Fig. 1 and Fig. 2 show a piston for a direct injection diesel engine according to this first embodiment. Fig. 1 is a longitudinal cross sectional view when the piston 1 is cut in a longitudinal direction thereof along a central axis of the piston 1. In addition, Fig. 2 is a transverse cross sectional view when the piston 1 is cut along a cutting line Z shown in Fig. 1. Moreover, Fig. 3 is a schematic construction view of an engine 100 in which the piston 1 according to this embodiment is incorporated. Here, note that in order to illustrate the piston 1 and the engine 100 in a simple and concise manner, a part of components thereof is omitted.

The engine 100 is provided with a cylinder block 2. A cylinder 3 in which the piston 1 is received is formed in the cylinder block 2. A cylinder head 4 is attached to an upper portion of the cylinder block 2. An intake port 5 leading to the cylinder 3 is formed in the cylinder head 4. An intake valve 6 is arranged in a boundary between the intake port 5 and the cylinder 3. Also, an exhaust port 7 leading to the cylinder 3 is formed in the cylinder head 4. An exhaust valve 8 is arranged in a boundary between the exhaust port 7 and the cylinder 3. In addition, a fuel injection valve 9 for injecting fuel is mounted on the cylinder head 4. This fuel injection valve 9 is arranged on a central axis A of the piston 1.

A crankshaft 102 is connected to the piston 1 through a connecting rod 101. Here, note that with respect to the piston 1, the side of the cylinder head 4 is set as an upper direction or side, and the side of the crankshaft 102 is set as a lower direction or side.

The piston 1 is constructed to be provided with a crown 11 and an outer peripheral portion 12. The crown 11 is arranged at the side of the cylinder head 4, and at the side of the central axis A. In addition, the outer peripheral portion 12 is arranged in such a manner as to surround the outer peripheral side and the lower side (at the side of the crankshaft 102) of the crown 11. The crown 11 and the outer peripheral portion 12 are produced separately from each other, and are thereafter joined to each other. The piston 1 has an upper surface 13 which is formed by an upper surface of the crown 11 and an upper surface of the outer peripheral portion 12.

The crown 11 is formed with a cavity 14. The cavity 14 is formed by being recessed from the upper surface 13 of the piston 1 in a downward direction of the piston 1. The cavity 14 has a shape which is defined by a cavity wall surface 15. The crown 11 has an outer surface 16 (a surface at the side of the outer peripheral portion 12) which is formed along the cavity wall surface 15. The crown 11 has a thickness which is made as small as possible within a range in which it can bear the stress generated in the cavity 14 during the operation of the engine 100, for example. Here, note that an outer peripheral surface 17 of the crown 11, which is a part of the outer surface 16 thereof and is a surface at an outer peripheral side thereof, is formed in a circular cylindrical shape around the central axis A of the piston 1. In addition, the outer surface 16 of the crown 11 may also be as an outer surface of the cavity 14.

Here, note that in this embodiment, the central axis of the cavity 14 is the same as the central axis A of the piston 1, but the central axis of the cavity 14 may be shifted or deviated from the central axis A of the piston 1. Also, in this embodiment, the transverse cross sectional shape of the cavity 14 is circular, but it may also be other shapes such as an elliptical shape.

The outer peripheral portion 12 is formed with a concave portion 18 which is recessed from the upper surface 13 in a downward direction so as to allow the crown 11 to be inserted or fitted into the concave portion 18. The concave portion 18 has a transverse cross sectional shape which is circular. This concave portion 18 has an opening portion 19 of a diameter which is a little larger than the diameter of the outer peripheral surface 17 of the crown 11 so that the crown 11 can be inserted or fitted into the concave portion 18. In addition, at the lower side from the opening portion 19, the concave portion 18 has an inner peripheral surface 20 which is larger in diameter than the outer peripheral surface 17 of the crown 11. Further, the distance from an arbitrary position of the upper surface 13 to a bottom surface 21 is longer than the distance therefrom to the outer surface 16.

The concave portion 18 of the outer peripheral portion 12 and the outer surface 16 of the crown 11 are joined to each other in the upper surface 13 of the piston 1 as well as its vicinity (it may also be as the opening portion 19), and in the piston central axis A as well as its vicinity. Here, note that the upper surface 13 and a joined part in the vicinity thereof are referred to as an upper surface joined portion 22, and the central axis A and a joined part in the vicinity thereof are referred to as a central joined portion 23.

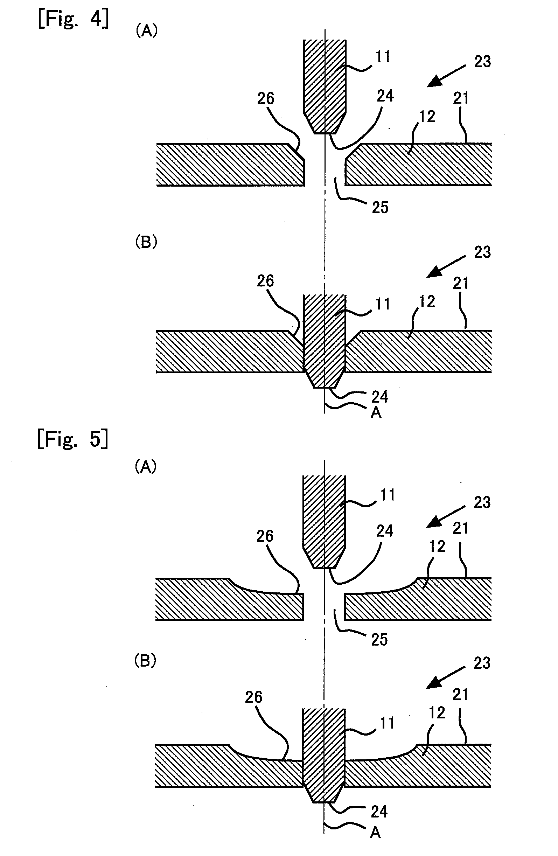

Fig. 4 and Fig. 5 are views showing the longitudinal cross sections of the central joined portion 23. Figs. 4(A) and Fig. 5(A) show the states before joining, and Fig. 4(B) and Fig. 5(B) show the states after joining. In the central joined portion 23, a central reinforcement portion 24 of a circular cylindrical shape extends from the crown 11 toward the bottom surface 21 of the outer peripheral portion 12 on the central axis A of the piston 1. This central reinforcement portion 24 is formed in a tapered shape which decreases in cross sectional area as it goes to its tip end.

The outer peripheral portion 12 has a through hole 25 formed therethrough into which the central reinforcement part 24 is to be inserted. The through hole 25 has an inside diameter which is a little larger than an outside diameter of the central reinforcement part 24, so that the central reinforcement portion 24 can be inserted into the through hole 25. The through hole 25 and the central reinforcement portion 24 play the role of positioning at the time of mounting the crown 11 on the outer peripheral portion 12. In addition, to weld this central reinforcement portion 24 to the through hole 25 serves to play the role of reinforcing the crown 11. Moreover, the central reinforcement portion 24 also serves to conduct the heat of the crown 11. That is, the cooling efficiency of the cavity wall surface 15 of the central portion, which in particular becomes high temperature, will be improved.

In Fig. 4 and Fig. 5, an upper edge 26 of the through hole 25 increases in its cross section as it goes to an upper side. That is, in the outer peripheral portion 12, the periphery of the central joined portion 23 is concaved or recessed to a lower side of the piston. Here, note that Fig. 5 shows a case where the diameter of a concave or recess of the edge 26 is larger than that in Fig. 4. Due to the structure that the tip end of the central reinforcement portion 24 is formed in a tapered shape, and the upper edge 26 of the through hole 25 is recessed toward the piston lower side, the central reinforcement portion 24 can be inserted into the through hole 25 in an easy manner.

With the piston 1 as constructed in this manner, there are gaps between the inner peripheral surface 20 of the concave portion 18 and the outer surface 16 of the crown 11, and between the bottom surface 21 of the concave portion 18 and the outer surface 16 of the crown 11, respectively, except for the upper surface joined portion 22 and the central joined portion 23. Here, note that the inner peripheral surface 20 and the bottom surface 21 of the concave portion 18 are also together referred to as an inner surface 27 of the outer peripheral portion 12. These gaps between the inner surface 27 of the outer peripheral portion 12 and the outer surface 16 of the crown 11 constitute cooling channels 28. That is, the piston 1 according to this embodiment is provided with the cooling channels 28 in an outer peripheral direction and in a downward direction of the cavity 14, respectively.

Then, the concave portion 18 is formed on the bottom surface 21 thereof with through holes 29 which extend in parallel to the central axis A of the piston 1 toward a lower side of the outer peripheral portion 12. These through holes 29 are arranged in a number of two in line symmetry with respect to the central axis A, whereas one thereof serves as an inlet port for oil, and the other thereof serves as an outlet port for oil. In addition, an annular groove 30 is formed on the bottom surface 21 of the concave portion 18 around the center of the central axis A of the piston 1, and the through holes 29 are formed on the bottom surface of the annular groove 30.

Three ring grooves 32 for holding piston rings, respectively, are formed on an outer peripheral surface 31 of the outer peripheral portion 12. A skirt portion 33 extending to the side of the crankshaft 102 is formed at the lower side of the ring grooves. Here, note that the connecting rod 101 is connected to the outer peripheral portion 12.

In addition, a plurality of ribs 34, being arranged around the central axis A of the piston 1 in a radial manner, are formed on the outer surface 16 of the crown 11 at locations opposing to the annular groove 30 formed on the bottom surface 21 of the concave portion 18. The ribs 34 extend in a downward direction from the crown 11 in a plate-shaped manner. In addition, the ribs 34 are arranged in a manner so as to be out of contact with the outer peripheral portion 12. That is, the annular groove 30 is formed in the downward direction of the ribs 34, so that a passage for oil is provided at the lower side of the ribs 34. Also, the ribs 34 are arranged in the radial fashion, so that spaces formed between adjacent ribs 34 serve as passages for oil. That is, oil is able to move between the respective cooling channels 28 which are provided in the outer peripheral direction and in the downward direction of the crown 11.

For the crown 11, there is used an iron type material or a stainless steel type material, for example. That is, a strong stress occurs on the cavity wall surface 15 due to the combustion of fuel, so a material with a high Young's modulus or a material with a high fatigue or endurance limit is used for the crown 11 in which the cavity wall surface 15 is formed. By the use of such a material, it is possible to make the thickness of the crown 11 thinner, so the mass of the crown 11 can be reduced, and hence, the heat capacity of the crown 11 can be made small.

On the other hand, for the outer peripheral portion 12, there is used an aluminum type material, for example. As a result of this, it is possible to suppress wear due to the sliding movement of the outer peripheral portion with respect to a cylinder wall surface. In addition, it is also possible to suppress the sticking of the piston rings. Then, by the use of such a material, the specific heat of the crown 11 becomes smaller than the specific heat of the outer peripheral portion 12. Here, note that even if the material of the crown 11 and the material of the outer peripheral portion 12 are the same, it will be possible to obtain the intended effect of the cooling channels 28. Moreover, the upper surface joined portion 22 and the central joined portion 23 are joined to each other by means of electron beam welding, for example.

Then, the engine 100 is provided with an oil pump 103 for forcing oil to circulate through the interior of the engine 100, as shown in Fig. 3. An oil passage 104 is connected to this oil pump 103, and the oil passage 104 leads to individual sliding portions and an oil jet 106, respectively. The oil pump 103 serves to pump up oil from an oil pan 105, and to supply the oil to the individual sliding portions and the oil jet 106, respectively.

The oil jet 106 injects the oil toward one of the through holes 29 which lead to the cooling channels 28. In the middle of the oil passage 104, there is arranged a cutoff valve 107 which serves to interrupt or cut off the oil passage 104. When the cutoff valve 107 is opened, oil is injected from the oil jet 106 so that the oil is supplied into the cooling channels 28, whereas when the cutoff valve 107 is closed, the injection of the oil from the oil jet 106 is stopped, so that the supplying of the oil into the cooling channels 28 is stopped. When the injection of the oil from the oil jet 106 is stopped, oil flows out from the cooling channels 28 to the outside of the piston 1 through the two through holes 29. Then, the gas lying at the lower side of the piston 1 flows into the cooling channels 28. Accordingly, at the time of stopping of the engine 100, the interiors of the cooling channels 28 are filled with gas.

Here, note that the cutoff valve 107 is controlled by means of an ECU 110. In addition, this ECU 110 carries out the control of the fuel injection valve 9. Then, in this embodiment, the oil pump 103 corresponds to a lubricating oil supply device in the present invention. Also, in this embodiment, the cutoff valve 107 corresponds to an adjustment device in the present invention. Moreover, in this embodiment, the ECU 110 corresponds to a control device in the present invention.

Then, a part of the oil supplied into the cooling channels 28 flows through along the annular groove 30. In addition, a part of the oil overflows from the annular groove 30. The oil having overflowed from the annular groove 30 is divided into an oil portion which passes at the side of the inner peripheral surface 20 of the concave portion 18 (i.e., at the outer peripheral side of the crown 11), and another oil portion which passes at the side of the bottom surface 21 of the concave portion 18 (i.e., at the lower side of the crown 11), as shown by arrows in Fig. 2. Here, note that the oil overflowing from the annular groove 30 flows between the adjacent ribs 34, 34.

As a result, oil spreads to the outer peripheral side and the lower side of the crown 11 in a uniform manner, so that the oil flows in such a manner as to wrap around the crown 11. According to this, the crown 11 as a whole can be cooled in a quick manner. In addition, the material with a small specific heat is used for the crown 11, and the thickness of the crown 11 is made thinner, thereby making the heat capacity of the crown 11 small. For this reason, when the temperature of the crown 11 is low such as at the time of cold starting of the engine 100, if the cutoff valve 107 is made into a fully closed state so that oil does not flow to the cooling channels 28, the temperature of the crown 11 will go up quickly due to the heat of combustion. This is able to improve the combustion state at an early stage, thus making it possible to reduce the amount of emissions of HC and CO.

In addition, by opening the cutoff valve 107 to supply oil to the cooling channels 28 after the temperature of the piston 1 has gone up appropriately, it is possible to suppress the overheating of the piston 1. Moreover, by circulating oil to the cooling channels 28 when the temperature of the oil is low, it is possible to raise the temperature of the oil in a quick manner. As a result of this, the viscosity of the oil can be decreased quickly, thus making it possible to reduce friction loss.

Further, as shown in Fig. 4 and Fig. 5, the structure is such that oil is stored or retained in the outer peripheral portion 12 around the central reinforcement portion 24, and hence a temperature rise in the vicinity of the central axis A of the crown 11 can be suppressed. As a result of this, it is possible to suppress a heat spot from being generated in the cavity wall surface 15.

Moreover, because the crown 11 is reinforced by the ribs 34, the volume of the cooling channels 28 can be increased, so that the warm-up performance of the oil can be improved, and at the same time, the temperature control of the crown 11 also becomes easy.

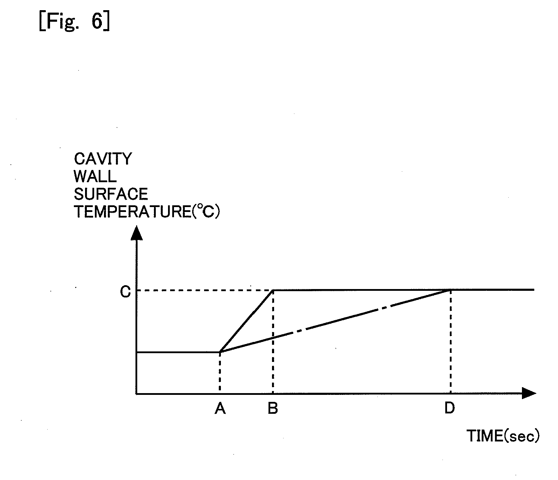

Here, Fig. 6 is a time chart showing the change over time of the temperature of the cavity wall surface 15. A solid line indicates the case of the piston 1 according to this embodiment, and an alternate long and short dash line indicates the case of a conventionally existing piston made of an aluminum alloy. The engine 100 is started up at a point in time as indicated at A. At this time, the cutoff valve 107 is closed so that the supply of oil is stopped. After the starting of the engine 100, the temperature of the cavity wall surface 15 goes up in a gradual manner. The rising rate of the temperature of the piston 1 according to this embodiment at this time is higher than that of the conventional one. That is, the heat capacity of the crown 11 has been made small, so the rate or speed of rise of the temperature of the cavity wall surface 15 becomes high. And, with the piston 1 according to this embodiment 1, a temperature indicated at C is reached at a point in time indicated at B. Here, note that the temperature indicated at C is a temperature at which an increase in the smoke or a decrease in the charging efficiency exceeds an allowable range. When the temperature indicated at C is reached, the cutoff valve 107 is opened so that oil is injected from the oil jet 106. With the conventionally existing piston, the temperature thereof rises to the temperature indicated at C at a point in time indicated at D. That is, the period of time to be taken or required for the piston 1 to rise to the temperature indicated at C after the engine 100 has been started is shorter in the piston 1 according to this embodiment than in the conventionally existing piston. Thus, the piston 1 according to this embodiment is higher in the warm-up performance than the conventional one.

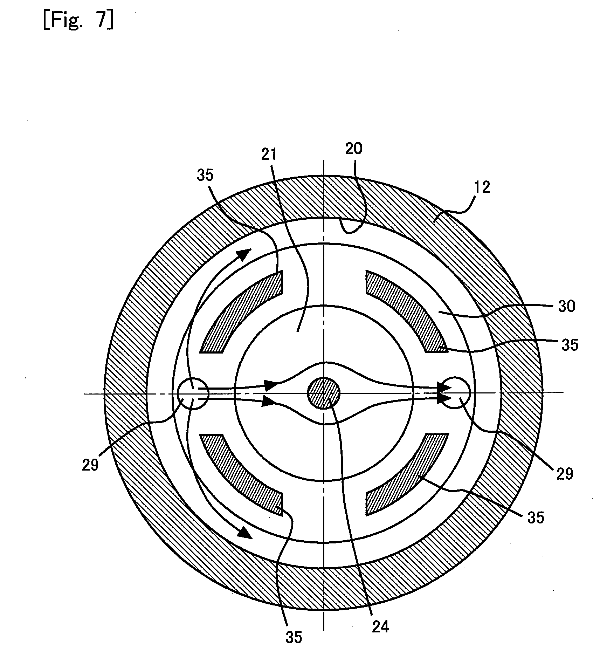

Here, note that in the shape of the ribs 34 shown in Fig. 2, when oil flows from one of the through holes 29 into the other through hole 29, it is apt to flow through the vicinity of the central axis A. For this reason, such a shape is advantageous from the point of view of increasing the amount of circulation of the oil in the cooling channels 28, but there is also a problem that it is difficult for oil to flow to the outer peripheral side of the crown 11. Here, the amount of the oil which flows through the outer peripheral side of the crown 11, and the amount of the oil which flows through the lower side thereof, can be adjusted according to the shape of the ribs 34. That is, the direction in which oil is apt to flow and the amount of circulation of oil are changed in accordance with the shape of the ribs 34, and hence, it is possible to adjust the cooling performance of the crown 11 and the like by adjusting the shape of the ribs 34. For example, the shape of the ribs with which it becomes easy for oil to flow toward the outer peripheral side of the crown 11 is shown in Fig. 7.

Fig. 7 is another transverse cross sectional view when a piston 1 according to this embodiment is cut. Except for the shape of ribs 35, the piston shown herein is the same as the piston 1 shown in Fig. 2. In contrast to the ribs 34 shown in Fig. 2, which are arranged in plurality in a radial fashion around the central axis A of the piston 1, the ribs 35, which are shown in Fig. 7, are arranged in plurality along the circumference of a circle around the central axis A of the piston 1. The ribs 35 shown in Fig. 7 are also formed at locations opposing to the annular groove 30. That is, the annular groove 30 is formed in the downward direction of the ribs 35, so that a passage for oil is provided at the lower side of the ribs 35. In addition, gaps are formed between individual adjacent ribs 35, respectively, and these gaps serve as passages for oil, respectively. That is, oil is able to move between the individual cooling channels 28 which are provided in the outer peripheral direction and in the downward direction of the crown 11, respectively.

Here, note that in the shape of the ribs 35 shown in Fig. 2, when oil flows from one of the through holes 29 into the other through hole 29, it becomes difficult for the oil to flow from the one through hole 29 to the direction of the central axis A. For this reason, such a shape is disadvantageous from the point of view of increasing the amount of circulation of the oil in the cooling channels 28, but it becomes easy for oil to flow to the outer peripheral side of the crown 11. Thus, the position which is apt to be cooled changes in accordance with the shape of the ribs, and hence the shape of the ribs may be set according to the kind and operating condition of the engine 100. Here, note that in this embodiment, the ribs 34, 35 correspond to a reinforcement part in the present invention.

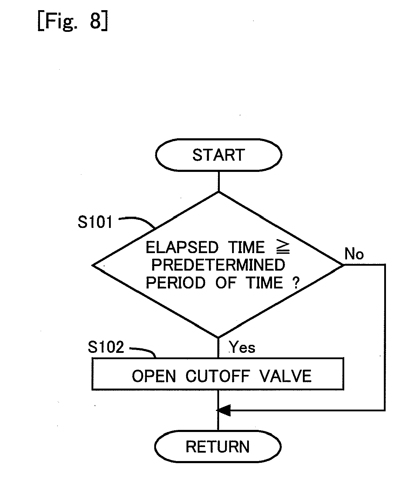

Fig. 8 is a flow chart showing a control flow or routine of the cutoff valve 107 according to this embodiment. This routine is carried out by means of the ECU 110 in a repeated manner at each predetermined time interval. Here, note that the cutoff valve 107 is closed at the time of the start up of the engine 100.

In step S101, it is determined whether the time elapsed from the start up of the engine 100 is longer than a predetermined period of time. This predetermined period of time is a value that is set in order to measure the timing to open the cutoff valve 107. This predetermined period of time is set according to at least one of an amount of emission of HC or a loss of friction. For example, a period of time from the start up of the engine 100 until the temperature of the cavity wall surface 15 goes up so that the amount of emission of HC comes to be within the allowable range can be set as the predetermined period of time. An optimum value for the predetermined period of time can be obtained, for example, through experiments, etc.

Here, when the time to open the cutoff valve 107 is made later at the time of cold start of the engine 100, the rise in temperature of the cavity wall surface 15 can be facilitated, but the temperature of the oil in the cooling channels 28 can not be raised until the cutoff valve 107 is opened. On the other hand, when the time to open the cutoff valve 107 is made earlier, the temperature of the oil can be raised, but the rise in temperature of the cavity wall surface 15 becomes slow. That is, the timing to open the cutoff valve 107 may be decided depending on whether priority is given to a decrease in the amount of emission of HC or a decrease in friction loss. In addition, the predetermined period of time may be decided according to the required performance of the engine 100.

Then, in cases where an affirmative determination is made in step S101, the control flow advances to step S102, whereas in cases where a negative determination is made, this routine is ended while holding the cutoff valve 107 in a closed state.

In step S102, the cutoff valve 107 is opened. As a result, oil is supplied into the cooling channels 28. Here, note that in this routine, oil is supplied based on the elapsed time after the start up of the engine 100, but instead of this, oil may be supplied based on the temperature of cooling water of the engine 1 or the temperature of the oil. That is, when the temperature of the cooling water or the oil is about 25 to 40 degrees C, the supply of the oil may be stopped, or the amount of supply thereof may be decreased, thereby attaining to raise the temperature of the cavity wall surface 15. In addition, the amount of supply of the oil may be made to increase in accordance with the elapsed time from the start up of the engine 100 or the temperature of the cooling water.

As described above, according to this embodiment, the heat capacity of the crown 11 is so small that even at the time of cold start of the engine, the temperature of the cavity wall surface 15 can be raised at an early stage. As a result, the amount of emission of HC, etc., can be reduced. In addition, the heat generated in the cavity 14 is apt to conduct to the oil, so that the temperature of the oil can be raised in a quick manner. Accordingly, friction loss can be reduced. Moreover, oil is circulated along the outer peripheral side and the lower side of the cavity 14, so that the overheating of the cavity wall surface 15 can be suppressed.

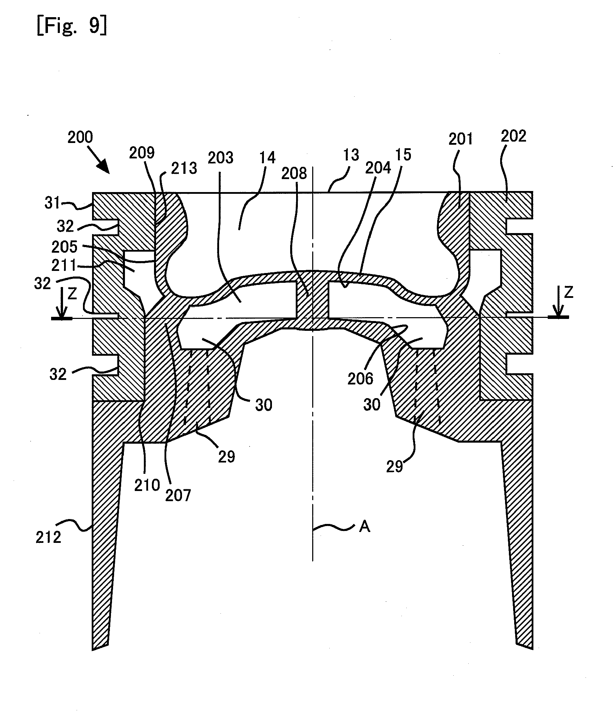

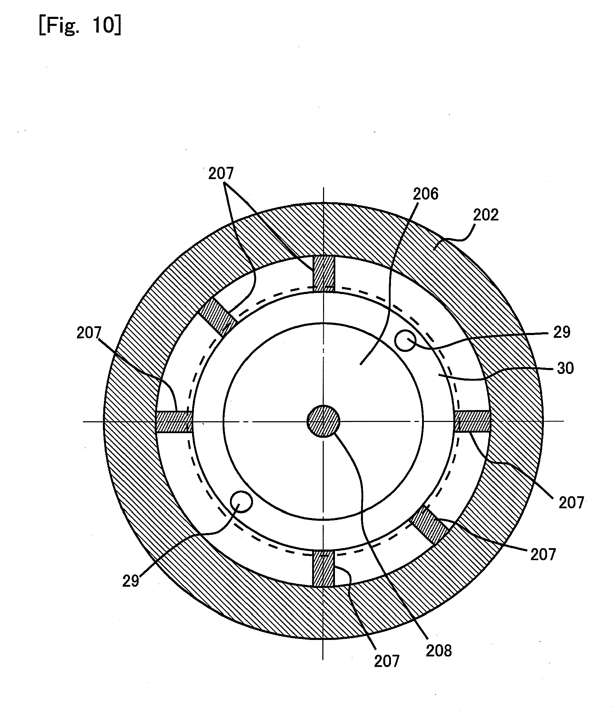

Fig. 9 and Fig. 10 show a piston 200 for a direct injection diesel engine not according to the invention. Fig. 9 is a longitudinal cross sectional view when the piston 200 is cut in a longitudinal direction thereof along a central axis A of the piston 200. Also, Fig. 10 is a transverse cross sectional view when the piston 200 is cut along a cutting line Z shown in Fig. 9. Here, note that in order to illustrate the piston 200 in a simple and concise manner, a part of components thereof is omitted. Devices, parts and so on other than the piston 200 are the same as those in the first embodiment, so the explanation thereof is omitted.

The piston 200 is constructed to be provided with a central portion 201 and an outer peripheral portion 202. The central portion 201 is arranged at the side of the central axis A. Also, the outer peripheral portion 202 is arranged at an outer peripheral side of the central portion 201 and within a range including ring grooves 32. The central portion 201 and the outer peripheral portion 202 are produced separately from each other, and are thereafter joined to each other. The piston 200 has an upper surface 13 which is formed by an upper surface of the central portion 201 and an upper surface of the outer peripheral portion 202.

The central portion is formed with a cavity 14. The cavity 14 is formed by being recessed from the upper surface 13 of the piston 200 in a downward direction of the piston 200. The cavity 14 has a shape which is defined by a cavity wall surface 15. A cooling channel 203 is formed at the lower side of the cavity 14.

The cooling channel 203 has an upper surface 204 formed along the cavity wall surface 15. A thickness of the cavity wall between the cavity wall surface 15 and the upper surface 204 of the cooling channel 203 is made as small as possible within a range in which it can bear the stress generated in the cavity 14 during the operation of the engine 100, for example. Here, note that an outer peripheral surface 205, which is a surface of the central portion 201 at an outer peripheral side thereof, is formed in a circular cylindrical shape around the central axis A of the piston 200.

Here, note that the central axis A of the piston 200 and the central axis of the cavity 14 are the same with each other, but the central axis of the cavity 14 may be shifted or deviated from the central axis A of the piston 200. Also, the transverse cross sectional shape of the cavity 14 is circular, but it may also be other shapes such as an elliptical shape.

Through holes 29 are formed in the bottom surface 206 of the cooling channel 203 in such a manner that they extend downwardly through the central portion 201 in parallel with the central axis A of the piston 200. These through holes 29 are arranged in a number of two in line symmetry with respect to the central axis A, whereas one thereof serves as an inlet port for oil, and the other thereof serves as an outlet port for oil. In addition, an annular groove 30 is formed on the bottom surface 206 of the cooling channel 203 around the central axis A of the piston 200, and the through holes 29 are formed in the bottom surface of the annular groove 30.

In addition, a plurality of pillars or supports 207 each having a rectangular cross section, which serve to connect the upper surface 204 and the bottom surface 206 of the cooling channel 203 with each other, are formed at the outer peripheral side of the annular groove 30. These pillars 207 are arranged in a radial fashion around the central axis A of the piston 200. Also, on the central axis A of the piston 200, there is arranged a central reinforcement portion 208 of a circular cross section, which serves to connect the upper surface 204 and the bottom surface 206 of the cooling channel 203 with each other. Then, the central portion 201 at the lower side of the cooling channel 203 extends up to a skirt portion 212. This skirt portion 212 is included in the central portion 201.

The outer peripheral portion 202 is formed in the shape of a cylinder around the central axis A, and an inner surface 213 of the outer peripheral portion 202 has a diameter slightly larger than the diameter of the outer peripheral surface 205 of the central portion 201, so that the outer peripheral portion 202 can be inserted or fitted into the central portion 201. In addition, three ring grooves 32 for holding piston rings, respectively, are formed on an outer peripheral surface 31 of the outer peripheral portion 202. Here, note that a connecting rod 101 is connected to the central portion 201.

The outer peripheral portion 202 is arranged at the outer peripheral side of both of the cavity 14 and the cooling channel 203. The inner surface 213 of the outer peripheral portion 202 is joined, at its upper portion 209 and its lower portion 210, to the central portion 201. And, between the upper portion 209 and the lower portion 210 of the outer peripheral portion 202, there is formed a gap between the outer peripheral portion 202 and the central portion 201. This gap functions as a cooling channel 211. That is, the piston 200 is provided with the cooling channels 203, 211 in an outer peripheral direction and in a downward direction of the cavity 14, respectively.

Then, the cooling channel 203 arranged at the lower side of the cavity 14 and the cooling channel 211 arranged in the outer peripheral direction of the cavity 14 are made in communication with each other between the adjacent pillars 207, 207.

For the central portion 201, there is used an iron type material or a stainless steel type material, for example. That is, a strong stress occurs on the cavity wall surface 15 due to the combustion of fuel, so a material with a high Young's modulus or a material with a high fatigue or endurance limit is used for the central portion 201 in which the cavity wall surface 15 is formed. By the use of such a material, it is possible to attain to decrease the thickness of the cavity wall between the cavity wall surface 15 and the upper surface 204 of the cooling channel 203, as a result of which the heat capacity of the surroundings of the cavity 14 can be made small.

On the other hand, for the outer peripheral portion 202, there is used, for example, an aluminum type material. For example, the central portion 201 is produced beforehand by means of casting, and the outer peripheral portion 202 is produced by means of casting pouring. Then, the upper portion 209 and the lower portion 210 of the outer peripheral portion 202 are joined to the central portion 201 by the use of electron beam welding, for example. By using such a material, it is possible to suppress wear due to the sliding movement of the outer peripheral portion with respect to the wall surface of a cylinder 3. In addition, it is also possible to suppress the sticking of the piston rings. Then, the specific heat of the central portion 201 becomes smaller than that of the outer peripheral portion 202. Here, note that even if the material of the central portion 201 and the material of the outer peripheral portion 202 are the same, it will be possible to obtain the intended effect of the cooling channels 203,211.

With the piston 200 as constructed in this manner, the heat in the cavity 14 can be conducted to the skirt portion 212 in a quick manner, so that the viscosity of oil can be decreased in a rapid manner. In addition, for the surroundings of the ring grooves 32, there is used a material such as an aluminum type material, which is higher in heat conductivity than iron, thus making it possible to suppress the sticking of the piston rings.

In addition, the heat capacity of the surroundings of the cavity 14 is so small that even at the time of cold start of the engine, the temperature of the cavity wall surface 15 can be raised at an early stage. As a result, the amount of emission of HC, etc., can be reduced. Moreover, the heat generated in the cavity 14 is apt to conduct to the oil, so that the temperature of the oil can be raised in a quick manner. Accordingly, friction loss can be reduced. Further, oil is circulated along the outer peripheral side and the lower side of the cavity 14, so that the overheating of the cavity wall surface 15 can be suppressed. That is, it is possible to reduce the friction loss, while suppressing the sticking of the piston rings.

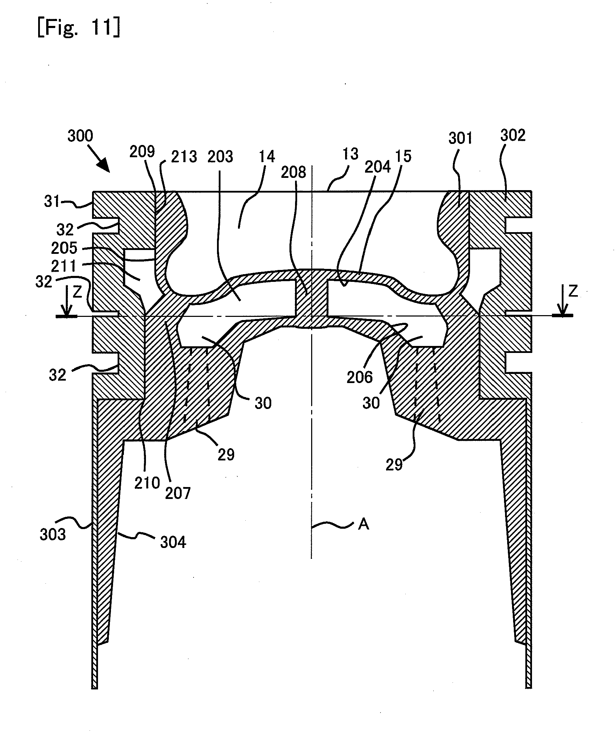

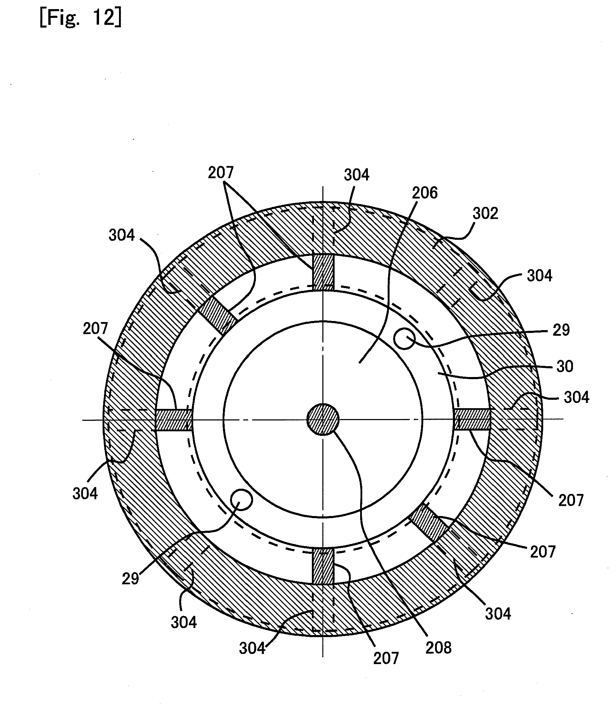

Fig. 11 and Fig. 12 show a piston 300 for a direct injection diesel engine not according to the invention. Fig. 11 is a longitudinal cross sectional view when the piston 300 is cut in a longitudinal direction thereof along a central axis A of the piston 300. Also, Fig. 12 is a transverse cross sectional view when the piston 300 is cut along a cutting line Z shown in Fig. 11. Here, note that in order to illustrate the piston 300 in a simple and concise manner, a part of components thereof is omitted. Devices, parts and so on other than the piston 300 are the same as those in the first embodiment, so the explanation thereof is omitted. In addition, the piston 300 will be hereinafter described about its features which are different from those of the piston 200.

The piston 300 is constructed to be provided with a central portion 301 and an outer peripheral portion 302. The central portion 301 is arranged at the side of the central axis A. Also, the outer peripheral portion 302 is arranged at an outer peripheral side of the central portion 301, and in the surroundings of ring grooves 32 as well as in a skirt portion 303 at the lower side thereof. The central portion 301 and the outer peripheral portion 302 are produced separately from each other, and are thereafter joined to each other.

Ribs 304 extending from the central portion 301 are arranged at the side of the central axis A of the skirt portion 303. The ribs 304 are arranged in plurality in a radial fashion around the central axis A. In addition, the skirt portion 303 and the ribs 304 are joined to each other by means of electron beam welding, for example.

With the piston 300 as constructed in this manner, the heat in a cavity 14 is conducted to the skirt portion 303 through the ribs 304 in a quick manner, so that the viscosity of oil can be decreased in a rapid manner. Here, if an iron type material is used for the whole of the skirt portion 303, there will be a fear that due to an excessive rise in the temperature thereof, boundary lubrication may take place, thus resulting in an increase in friction loss. In this case, however, it is possible to suppress such a phenomenon.

That is, it is possible to further reduce the friction loss, while suppressing the sticking of piston rings.

### EXPLANATION OF REFERENCE NUMERALS AND CHARACTERS

- 1: piston
- 2: cylinder block
- 3: cylinder
- 4: cylinder head
- 5: intake port
- 6: intake valve
- 7: exhaust port
- 8: exhaust valve
- 9: fuel injection valve
- 11: crown
- 12: outer peripheral portion
- 13: upper surface
- 14: cavity
- 15: cavity wall surface
- 16: outer surface
- 17: outer peripheral surface
- 18: concave portion
- 19: opening portion
- 20: inner peripheral surface
- 21: bottom surface
- 22: upper surface joined portion
- 23: central joined portion
- 24: central reinforcement portion
- 25: through hole
- 26: edge
- 27: inner surface
- 28: cooling channels
- 29: through holes
- 30: annular groove
- 31: outer peripheral surface
- 32: ring grooves
- 33: skirt portion
- 34: ribs
- 35: ribs
- 100: engine
- 101: connecting rod
- 102: crankshaft
- 103: oil pump
- 104: oil passage
- 105: oil pan
- 106: oil jet
- 107: cutoff valve
- 110: ECU

## Claims

1. A piston for an internal combustion engine comprising:
a crown (11) that has a cavity (14) formed to be recessed from a piston top surface toward a piston lower side;
an outer peripheral portion (12) that is joined to said crown (11) so as to surround at least a piston outer peripheral side of said crown (11), and has a ring groove (32) formed on its outer periphery for holding a piston ring;
cooling channels (28) that include a gap between said crown (11) and said outer peripheral portion (12), and are formed at the piston outer peripheral side and at the piston lower side of said cavity (14) so as to make the piston outer peripheral side and the piston lower side in communication with each other; and
at least two communication holes (29) that make said cooling channels (28) and a piston outside in communication with each other, and serve as an inlet port or an outlet port for lubricating oil;
wherein said outer peripheral portion (12) also surrounds a piston lower portion at the lower side of said crown (11); and
wherein said crown (11) has a central reinforcement portion (24) that protrudes from an outer surface of said cavity (14) so as to extend up to a bottom surface of said cooling channels (28) on a piston central axis (A);
**characterized in that**
a through hole (25) is formed through the bottom surface of said cooling channels (28) into which hole (25) said central reinforcement portion (24) is to be inserted; and
the bottom surface of said cooling channels (28) around the periphery of said central reinforcement portion (24) is recessed toward the piston lower side,
wherein said crown (11) has a reinforcement part (34,35) which protrudes to a side of said cooling channels (28) so as to reinforce said crown (11), and which is arranged with a passage being formed for the lubricating oil to move between the individual cooling channels (28) which are formed at the piston outer peripheral side and at the piston lower side of said cavity (14), respectively.

2. The piston for an internal combustion engine as set forth in claim 1, **characterized in that** said passage through which the lubricating oil moves is formed at the piston lower side of said reinforcement part.

3. The piston for an internal combustion engine as set forth in any one of claims 1 or 2, **characterized in that** a material, which is smaller in specific heat than said outer peripheral portion (12), is used for said crown (11).

4. An internal combustion engine **characterized by** comprising:
said piston (1) for an internal combustion engine as set forth in any one of claims 1 through 3;
a lubricating oil supply device (103) that supplies the lubricating oil to said cooling channels (28) through said communication holes (29);
an adjustment device (107) that adjusts an amount of the lubricating oil to be supplied to said cooling channels (28) from said lubricating oil supply device (103); and
a control device (110) that makes the amount of the lubricating oil to be supplied smaller when the temperature of the internal combustion engine is low than when it is high.

## Patentansprüche

1. Kolben für einen Verbrennungsmotor mit:
einer Krone (11), die einen Hohlraum (14) hat, der so ausgebildet ist, dass er von einer oberen Kolbenfläche zu einer unteren Kolbenfläche vertieft ist;
einem Außenumfangsabschnitt (12), der mit der Krone (11) so verbunden ist, dass er zumindest eine Kolbenaußenumfangsseite der Krone (11) umgibt, und eine Ringnut (32) hat, die an seinem Außenumfang zum Halten eines Kolbenrings ausgebildet ist;
Kühlkanälen (28), die einen Zwischenraum zwischen der Krone (11) und dem Außenumfangsabschnitt (12) umfassen, und die an der Kolbenaußenumfangsseite und an der unteren Kolbenseite des Hohlraums (14) so ausgebildet sind, dass sie bewirken, dass die Kolbenaußenumfangsseite und die untere Kolbenseite in Kommunikation miteinander stehen; und
zumindest zwei Kommunikationslöchern (29), die bewirken, dass die Kühlkanäle (18) und eine Kolbenaußenseite in Kommunikation miteinander gelangen, und die als eine Einlassöffnung oder eine Auslassöffnung für Schmieröl dienen;
wobei der Außenumfangsabschnitt (12) auch einen unteren Kolbenabschnitt an der unteren Seite der Krone (11) umgibt; und
wobei die Krone (11) einen Zentralverstärkungsabschnitt (24) hat, der von einer Außenfläche des Hohlraums (14) so vorragt, dass er sich bis zu einer Bodenfläche der Kühlkanäle (28) auf einer Kolbenmittelachse (A) erstreckt;
**dadurch gekennzeichnet, dass**
ein Durchgangsloch (25) durch die Bodenfläche der Kühlkanäle (28) ausgebildet ist, wobei in das Loch (25) der Zentralverstärkungsabschnitt (24) eingeführt ist; und
die Bodenfläche der Kühlkanäle (28) um den Umfang des Zentralverstärkungsabschnittes (24) herum zu der unteren Kolbenseite vertieft ist,
wobei die Krone (11) einen Verstärkungsabschnitt (34, 35) hat, der zu einer Seite der Kühlkanäle (28) so vorragt, dass er die Krone (11) verstärkt, und der mit einem Kanal angeordnet ist, der so ausgebildet ist, dass das Schmieröl sich zwischen den einzelnen Kühlkanälen (28) bewegt, die an der Kolbenaußenumfangsseite und der unteren Kolbenseite des Hohlraums (14) jeweils ausgebildet sind.

2. Kolben für einen Verbrennungsmotor gemäß Anspruch 1, **dadurch gekennzeichnet, dass** der Kanal, durch den sich das Schmieröl bewegt, an der unteren Kolbenseite des Verstärkungsteils ausgebildet ist.

3. Kolben für einen Verbrennungsmotor gemäß einem der Ansprüche 1 oder 2, **dadurch gekennzeichnet, dass** ein Material, das eine geringere spezifische Wärme als der Außenumfangsabschnitt (12) hat, für die Krone (11) verwendet wird.

4. Verbrennungsmotor, **dadurch gekennzeichnet, dass** er Folgendes aufweist:
den Kolben (1) für einen Verbrennungsmotor gemäß einem der Ansprüche 1 bis 3;
eine Schmierölliefervorrichtung (103), die das Schmieröl zu den Kühlkanälen (28) durch die Kommunikationslöcher (29) liefert;
eine Einstellvorrichtung (107), die die Menge an Schmieröl einstellt, die zu den Kühlkanälen (28) von der Schmierölliefervorrichtung (103) zu liefern ist; und
eine Steuervorrichtung (110), die bewirkt, dass die Menge an Schmieröl, die zu liefern ist, geringer ist, wenn die Temperatur des Verbrennungsmotors niedrig ist, als dann, wenn sie hoch ist.

## Revendications

1. Piston pour un moteur à combustion interne comprenant :
une couronne (11) qui a une cavité (14) formée pour être enfoncée à partir d'une surface supérieure de piston vers un côté inférieur de piston ;
une partie périphérique externe (12) qui est assemblée à ladite couronne (11) afin d'entourer au moins un côté périphérique externe de piston de ladite couronne (11), et a une rainure annulaire (32) formée sur sa périphérique externe pour maintenir une bague de piston ;
des canaux de refroidissement (28) qui comprennent un espace entre ladite couronne (11) et ladite partie périphérique externe (12), et sont formés au niveau du côté périphérique externe de piston et au niveau du côté inférieur de piston de ladite cavité (14) afin de faire communiquer le côté périphérique externe de piston et le côté inférieur de piston entre eux ; et
au moins deux trous de communication (29), qui font communiquer lesdits canaux de refroidissement (28) et un piston à l'extérieur entre eux, et servent d'orifice d'entrée ou d'orifice de sortie pour l'huile de lubrification ;
dans lequel ladite partie périphérique externe (12) entoure également une partie inférieure de piston au niveau du côté inférieur de ladite couronne (11) ; et
dans lequel ladite couronne (11) a une partie de renforcement centrale (24) qui fait saillie d'une surface externe de ladite cavité (14) afin de s'étendre jusqu'à une surface inférieure desdits canaux de refroidissement (28) sur un axe central de piston (A) ; **caractérisé en ce que** :
le trou débouchant (25) est formé à travers la surface inférieure desdits canaux de refroidissement (28), dans lequel trou (25), ladite partie de renforcement centrale (24) doit être insérée ; et
la surface inférieure desdits canaux de refroidissement (28) autour de la périphérie de ladite partie de renforcement centrale (24) est enfoncée vers le côté inférieur de piston,
dans lequel ladite couronne (11) a une partie de renforcement (34, 35) qui fait saillie vers un côté desdits canaux de refroidissement (28) afin de renforcer ladite couronne (11) et qui est agencée avec un passage qui est formé pour déplacer l'huile de lubrification entre les canaux de refroidissement individuels (28) qui sont formés au niveau du côté périphérique externe de piston et au niveau du côté inférieur de piston de ladite cavité (14), respectivement.

2. Piston pour un moteur à combustion interne selon la revendication 1, **caractérisé en ce que** ledit passage à travers lequel l'huile de lubrification se déplace, est formé au niveau du côté inférieur de piston de ladite partie de renforcement.

3. Piston pour un moteur à combustion interne selon l'une quelconque des revendications 1 ou 2, **caractérisé en ce qu'**un matériau, qui est inférieur en chaleur spécifique à ladite partie périphérique externe (12), est utilisé pour ladite couronne (11).

4. Piston pour un moteur à combustion interne **caractérisé en ce qu'**il comprend :
ledit piston (1) pour un moteur à combustion interne selon l'une quelconque des revendications 1 à 3 ;
un dispositif d'alimentation en huile de lubrification (103) qui amène l'huile de lubrification auxdits canaux de refroidissement (28) par lesdits trous de communication (29) ;
un dispositif d'ajustement (107) qui ajuste une quantité d'huile de lubrification à amener auxdits canaux de refroidissement (28) à partir dudit dispositif d'alimentation en huile de lubrification (103) ; et
un dispositif de commande (110) qui rend la quantité d'huile de lubrification à fournir plus petite lorsque la température du moteur à combustion interne est basse, que lorsqu'elle est élevée.
